# EUROPÄISCHE PATENTSCHRIFT

(11) **EP 0 451 744 B1**
(45) Veröffentlichungstag und Bekanntmachung des Hinweises auf die Patenterteilung: **19.07.1995**
(21) Anmeldenummer: 91105490.6
(22) Anmeldetag: 08.04.1991
(51) Int. Cl.: B60R 1/08, B60S 1/08

(54) **Vorrichtung zum Betreiben einer Scheibenwischanlage**
Device for controlling a windscreen wiper system
Dispositif de commande d'un système d'essuie-glaces

(30) Priorität: 10.04.1990 DE 4011510
(43) Veröffentlichungstag der Anmeldung: 16.10.1991
(73) Patentinhaber: ROBERT BOSCH GMBH, 70442 Stuttgart (DE)
(72) Erfinder: Mangler, Jürgen, W-7554 Kuppenheim 2 (DE)

(56) Entgegenhaltungen:
- DE-A- 3 314 770
- DE-B- 2 354 100
- FR-A- 2 498 137
- US-A- 4 463 294
- US-A- 4 705 998
- PATENT ABSTRACTS OF JAPAN vol. 10, no. 222 (M-504)(2278) 2. August 1986

## Beschreibung

### Stand der Technik

Die Erfindung geht aus von einer Vorrichtung zum Betreiben einer Scheibenwischanlage. Aus der DE-AS 23 54 100 ist ein Scheibenverschmutzungssensor bekannt, dem ein optisches Meßverfahren zugrunde liegt. Das von einer Lichtquelle durch ein Prisma in eine Scheibe eingekoppelte Licht trifft auf die zu reinigende Scheibenoberfläche. Das an der mit Wasser benetzten oder verschmutzten äußeren Scheibenfläche unter einem bestimmten Winkel reflektierte Licht wird durch die Scheibe zurückgeleitet und durch ein weiteres Prisma von der Scheibe ausgekoppelt. Das reflektierte Licht wird von einem Lichtmeßgerät empfangen, an dem ein Signalgeber angeschlossen ist, der beispielsweise einen Wischvorgang eines Scheibenwischers auslöst. Es werden nur diejenigen von der Lichtquelle ausgesandten und an der verschmutzten Scheibenfläche reflektierten Lichtanteile vom Lichtmeßgerät erfaßt, die an der verschmutzten Scheibenfläche unter dem Winkel der Totalreflektion abgehen. Das Lichtmeßgerät mißt einen bestimmten Wert bei ungestörter Totalreflexion, der einem Nullwert entspricht. Bei Veränderungen der Intensität des totalreflektierten Lichtes durch Wassertropfen oder Schmutzpartikel stellt das Lichtmeßgerät neue geringere Meßwerte fest und leitet sie an den Signalgeber weiter, der auf einen festen Grenzwert eingestellt ist. Wird dieser Grenzwert überschritten, so wird ein Signal abgegeben, das beispielsweise den Scheibenwischer einschaltet.

Aus der DE-A 33 14 770 ist eine Einrichtung zum Steuern eines Scheibenwischermotors bekannt, die ebenfalls in Abhängigkeit von dem von einem Sensor abgegebenen Signal, das ein Maß für die Benetzung der Scheibe mit Wasser oder Schmutz ist, ein Ansteuersignal für den Scheibenwischer bereitstellt. Das vom Sensor abgegebene Signal wird mit einer Schwelle verglichen, die in Abhängigkeit von dem vom Sensor abgegebenen Extremwert selbständig nachstellbar ist. Die Nachführung der Schaltschwelle kompensiert eine Langzeitdrift und eine Temperaturdrift der elektronischen Schaltung und berücksichtigt den Scheibenoberflächenzustand, der sich beispielsweise durch Kratzer ständig verändert.

Aus der JP-A 61-60 353 (Patent Abstract of Japan, vol. 10, No. 222 (M-503) (2278), 2. Aug. 1986) ist eine Schaltung zum Betreiben einer Scheibenwischanlage nach dem Oberbegriff des Anspruchs 1 bekannt, die ein von einem Regensensor abgegebenes Signal in zwei getrennten Signalpfaden verarbeitet. Ein erster Signalpfad wertet einen höherfrequenten Signalanteil des vom Regensensor abgegebenen Signals aus. Nach einer Hochpaßfilterung werden positive Signalanteile in einer Integrationsschaltung aufintegriert. Das Integrationsergebnis wird in einem Vergleicher mit einer fest vorgegebenen Schwelle verglichen. Nach Überschreiten der fest vorgegebenen Schwelle gibt der Vergleicher ein Steuersignal an eine nachfolgende Ansteuerschaltung für den Scheibenwischermotor ab. Der zweite Signalpfad wertet die niederfrequenten Signalanteile des vom Regensensor abgegebenen Signals aus. Das Signal wird einer Schaltung zugeführt, die eine gleitende Integration vornimmt. Die gleitende Integration wird durch ein R-C-Tiefpaßfilter realisiert, wobei parallel zum Integrationskondensator ein Parallelwiderstand geschaltet ist, der eine Abintegration vornimmt. Das Ergebnis der gleitenden Integration wird in einem zweiten Vergleicher mit einem zweiten, fest vorgegebenen Vergleichswert verglichen. Der zweite Vergleicher gibt ebenfalls ein Steuersignal an die nachfolgende Steuerschaltung ab.

Die bekannten Vorrichtungen weisen die Unzulänglichkeit auf, daß der Regensensor nicht zwischen einer Beregnung und Wasserschlieren unterscheiden kann. Schlieren bleiben insbesondere bei abgenutzten Wischblättern oder beispielsweise bei verschmutzter Scheibenoberfläche nach dem Wischvorgang zurück. Als Folge davon wird der Scheibenwischer oft zu spät abgeschaltet und die Wischblätter wischen trocken.

Der Erfindung liegt die Aufgabe zugrunde, eine Vorrichtung zum Betreiben einer Scheibenwischanlage anzugeben, die die Wischvorgänge präziser an den Bedarf anpaßt.

### Vorteile der Erfindung

Die erfindungsgemäße Vorrichtung weist den Vorteil einer präzisen Anpassung der Wischvorgänge an den Bedarf auf. Erreicht wird dies durch eine Auswerteschaltung für das vom Regensensor abgegebene Signal, die einen ersten Signalweg für die Auswertung von höherfrequenten Signalanteilen und einen zweiten Signalweg zur Auswertung von niederfrequenten Signalanteilen enthält, wobei im Signalweg zur Auswertung der niederfrequenten Signalanteile eine Sperre vorgesehen ist, die das zur Ansteuerung der Scheibenwischanlage erzeugte Signal für eine vorgebbare Zeit unterdrückt.

Niederfrequente Signalanteile entstehen beispielsweise durch Schlieren oder Verschmutzung der Scheibe während des Wischvorgangs. Die Unterdrückung des Signals zur Ansteuerung der Scheibenwischanlage bei Auftreten von niederfrequenten Signalanteilen für eine vorgebbare Zeit reduziert unnötige Wischvorgänge, die keine weitere Reinigung der Scheibenoberfläche bewirken würden. Gleichzeitig ist die Empfindlichkeit des Regensensors für höherfrequente Signalanteile, die durch Regen entstehen, vollständig erhalten.

Die Grenze zwischen höher- und niederfrequenten Signalanteilen in dem vom Sensor abgegebenen Signal wird für eine vorgegebene Scheibenwischanlage vorzugsweise experimentell ermittelt. Der niederfrequente Signalanteil kann im Bereich von 0.1 Hz bis 10 Hz liegen, während der höherfrequente Signalanteil im Bereich von 1 Hz bis 1 kHz liegen kann.

Die vorzugebende Zeit für die Sperre liegt im Sekundenbereich, wobei die Zeit für eine Wischbewegung berücksichtigt werden kann. Auch dieser Wert wird vorzugsweise experimentell ermittelt.

Vorteilhafte Weiterbildungen und Verbesserungen der im Hauptanspruch angegebenen Vorrichtung ergeben sich aus Unteransprüchen.

Der Signalweg zur Auswertung der niederfrequenten Signalanteile enthält vorteilhafterweise eine gleichspannungsgekoppelte Anordnung, die eine problemlose Verarbeitung von Signaländerungen ermöglicht, die im Sekundenbereich liegen.

Der Signalweg zur Auswertung der höherfrequenten Signalanteile enthält vorteilhafterweise ein Bandpaß-Filter, dessen Frequenzgrenzen auf das zu erwartende Signalspektrum des vom Regensensor abgegebenen Signals abgestimmt sind.

Besonders vorteilhaft ist es, die Schaltschwelle in wenigstens einem der beiden Signalwege, vorzugsweise in beiden Signalwegen, in Abhängigkeit von dem vom Sensor abgegebene Extremwert nachzuführen. Mit dieser Maßnahme ist das Betriebsverhalten der erfindungsgemäßen Vorrichtung optimal an die jeweils vorliegenden Betriebsbedingungen angepaßt. Drift- und Alterungsvorgänge innerhalb der gesamten Vorrichtung werden selbsttätig berücksichtigt.

Der Regensensor kann beispielsweise nach dem resistiven, akustischen, kapazitiven oder einem anderen geeigneten Prinzip arbeiten. Besonders geeignet ist jedoch der optische Sensor, bei dem innerhalb der Scheibe eine Ein- oder Mehrfachreflexion unter dem Winkel der Totalreflexion stattfindet, wobei eine Benetzung der Scheibenoberfläche durch Feuchtigkeit oder Schmutz eine Strahlungsauskopplung und somit eine Signalschwächung bewirkt.

Eine hohe Störunempfindlichkeit gegenüber optischen Störungen, die beispielsweise durch schnelle Wechsel von Licht und Schatten entstehen, wird durch einen gepulsten Betrieb der Strahlungsquelle erreicht. Schnelle Hell-Dunkelwechsel sind insbesondere dann gegeben, wenn die Scheibenwischanlage in einem Kraftfahrzeug eingebaut ist.

Zur Abtrennung des gepulsten Signals, das die gewünschte Information enthält, von den Störungen ist auf der Strahlungsempfängerseite ein Hochpaß-Filter vorgesehen.

Eine vorteilhafte Weiterbildung der erfindungsgemäßen Vorrichtung sieht eine weitere Auswertung des höherfrequenten Signalanteils zur Steuerung der Arbeitsgeschwindigkeit der Scheibenwischanlage vor. Bei stärkerem Regen oder - sofern die Vorrichtung in einem Kraftfahrzeug angeordnet ist - bei höherer Fahrgeschwindigkeit verschiebt sich das vom Regensensor abgegebene Signal in Richtung höheren Frequenzen. Es ist deshalb beispielsweise mit einem geeignet dimensionierten Hochpaß oder beispielsweise einem Differenzierer möglich, die Zunahme von höheren Signalfrequenzanteilen zu detektieren und die Ansteuerung der Scheibenwischanlage entsprechend zu steuern.

Weitere Vorteilhafte Weiterbildungen und Ausgestaltungen der erfindungsgemäßen Vorrichtung zum Betreiben einer Scheibenwischanlage ergeben sich aus der folgenden Beschreibung.

### Zeichnung

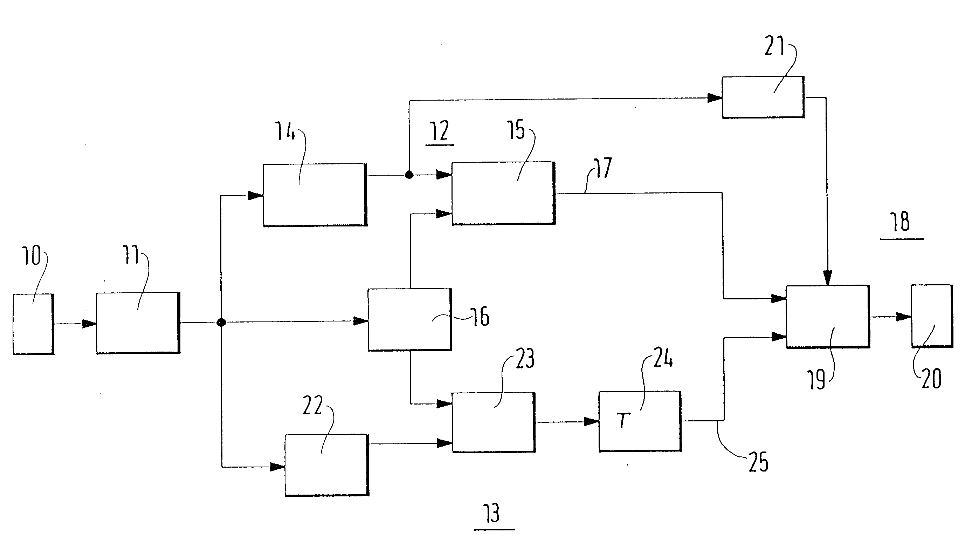

Die Figur zeigt ein Blockschaltbild einer erfindungsgemäßen Vorrichtung zum Betreiben einer Scheibenwischanlage.

Bei dem in der einzigen Figur dargestellten Blockschaltbild ist das Ausgangssignal eines Regensensors 10 zur Erfassung der Nässe oder Benetzung auf einer nicht dargestellten Scheibe mit einem Filter 11 verbunden. Der Ausgang des Filters 11 führt zu einem ersten und zweiten Signalweg 12, 13. Der erste Signalweg 11 enthält eine erste signalverarbeitende Anordnung 13 zur Auswertung von höherfrequenten Signalanteilen des vom Regensensor 10 abgegebenen Signals sowie einen ersten Komparator 15. Der erste Komparator 15 vergleicht das von der Anordnung 14 abgegebene Signal mit einer ersten Schwelle, die eine Schwellennachführung 16 in Abhängigkeit von dem vom Regensensor 10 abgegebenen Signal ermittelt. Am Ausgang des Komparators 15 tritt ein erstes Ansteuersignal 17 zur Ansteuerung der Scheibenwischanlage 18 auf, die eine Ansteuerung 19 sowie eine Mechanik 20 mit einem nicht gezeigten Antriebsmotor und beispielsweise einem Getriebe enthält. Vom Ausgang der ersten signalverarbeitenden Anordnung 14 wird ein Signal abgegriffen, das einer Signalbewertung 21 zugeleitet wird, die ein Ausgangssignal an die Ansteuerung 19 abgibt.

Der zweite Signalweg 13 enthält eine zweite signalverarbeitende Anordnung 22, der das vom Regensensor 10 abgegebene Signal zugeleitet wird. Das Ausgangssignal der zweiten signalverarbeitenden Anordnung 22 wird einem zweiten Komparator 23 zugeleitet, der das Signal mit einer zweiten Schwelle vergleicht, die in der Schwellennachführung 16 in Abhängigkeit von dem vom Regensensor 10 abgegebenen Signal ermittelt wird. Der zweite Komparator 23 ist mit einer Sperre 24 verbunden, die das am Ausgang des Komparators 23 auftretende Signal nach einem ersten Auftreten, das eine vorgebbare Anzahl von Wischvorgängen auslöst, für eine vorgebbare Zeit T unterdrückt.

Die erfindungsgemäße Vorrichtung wird anhand dem in der Figur gezeigten Blockschaltbild näher erläutert:
Der Regensensor 10 gibt ein Signal ab, das ein Maß ist für die Benetzung einer zu reinigenden Scheibenoberfläche mit Feuchtigkeit, Wasser oder Schmutz. Obwohl dem Regensensor 10 ein resistives, akkustisches, kapazitives, hochfrequentes oder anderes geeignetes Prinzip zugrunde liegen kann, hat sich der optische Regensensor als besonders geeignet herausgestellt. Bei diesem Sensor wird die Strahlung einer Strahlungsquelle mit einem optischen Element in eine Scheibe geleitet. Der Einfallswinkel ist so gewählt, daß innerhalb der Scheibe eine oder mehrere Totalreflexionen stattfinden, sofern die zu reinigende Scheibenoberfläche sauber ist. Der Einfallswinkel für Totalreflexionen liegt in einem Bereich von ca. 42° bis 63°. Feuchtigkeit, Wasser oder Schmutz auf der Scheibenoberfläche koppeln einen Teil der in der Scheibe verlaufenden Strahlung aus und schwächen somit das von einem Strahlungsempfänger aufgenommene Signal. Ein Strahlauskopplung findet statt, weil die Brechzahl von Wasser oder Schmutz höher ist als die von Luft, wobei der Einfallswinkel für die Totalreflexion erhöht wird. Totalreflexion würde jetzt erst bei einem Winkel auftreten, der mehr als 63° beträgt.

Eine Erhöhung der Störsignalunterdrückung wird erreicht, wenn die Strahlungsquelle 10 gepulst betrieben wird. Eine erste Signalfilterung des vom Regensensor 10 abgegebenen Signals findet im Filter 11 statt. Das Filter 11 enthält beispielsweise ein Hochpaß-Filter, dessen untere Grenzfrequenz auf die Impulsfolgefrequenz der Strahlungsquelle abgestimmt ist. Diese Frequenz wird derart gewählt, daß sie weit oberhalb des zu erwartenden Spektrums des Storsignalanteils liegt. Experimentell wurde herausgefunden, daß sie oberhalb von etwa 10 kHz, vorzugsweise bei etwa 20 kHz liegen kann. Die untere Grenzfrequenz des Hochpaß-Filters 11 kann dann beispielsweise bei 15-20 kHz liegen. Anstelle des einfachen Filters 11 ist beispielsweise in der zitierten DE-PS 33 14 770 ein Synchrondemodulator vorgesehen, der eine extrem schmalbandige Signalauswertung ermöglicht. Nachteilig ist der im Vergleich zu einem einfachen Hochpaß-Filter größere Aufwand zur Realisierung sowie der weitaus größere Nachteil, daß ein Synchrondemodulator Vielfache der Impulsfolgefrequenz als Nutzsignale interpretiert. Das Ausgangssignal des Filters 11 kann gegebenenfalls noch weiter verarbeitet werden bevor es der ersten und zweiten signalverarbeitenden Anordnung 14, 22 zugeleitet wird.

Die erste signalverarbeitende Anordnung 14 ist Teil eines ersten Signalwegs 12, der die hochfrequenten Anteile des vom Regensensor 10 abgegebenen Signals auswertet. Die erste signalverarbeitende Anordnung 14 enthält beispielsweise einen Verstärker mit einem Bandpaß-Filter, das auf das erwartete Signalspektrum abgestimmt ist. Experimentell wurde festgestellt, daß der zu erwartende Signalfrequenzbereich etwa zwischen 1 Hz und 1 kHz liegt. In den meisten Fällen reicht eine untere Grenzfrequenz von 5 Hz aus. Ein hochfrequenter Signalanteil tritt auf, wenn Regen auf die zu reinigende Scheibenoberfläche fällt. Stärkerer Regen oder - sofern die erfindungsgemäße Vorrichtung in einem Kraftfahrzeug angeordnet ist - höhere Fahrgeschwindigkeit lassen hohe Frequenzen im Spektrum auftreten. Das Ausgangssignal der ersten signalverarbeitenden Anordnung 14 wird im ersten Komparator 15 mit einer Schwelle verglichen, die in der Schwellennachführung 16 aus dem vom Regensensor 10 abgegebenen Signal, insbesondere aus Extremwerten des Signals abgeleitet ist. Die Schwellennachführung 16, gegebenenfalls in Verbindung mit einer vorgebbaren Hysterese des Komparators 15, führt zu einer optimalen Anpassung der vom Komparator 15 abgegebenen ersten Ansteuersignale 17 an die vorherrschenden Bedingungen an der zu reinigenden Scheibenoberfläche, wobei Langzeiteffekte, beispielsweise durch Kratzer in der Scheibenoberfläche, eliminiert werden. Das Auftreten des ersten Ansteuersignals 17 aktiviert die Scheibenwischanlage 18 über die Ansteuerung 19.

Die zweite signalverarbeitende Anordnung 22 ist Teil des zweiten Signalwegs 13, der niederfrequente Anteile des vom Regensensor 10 abgegebenen Signals auswertet. Die Frequenz liegt etwa in einem Bereich von 0.1 Hz bis 10 Hz. Die Frequenzgrenzen werden vorzugsweise experimentell bei einer gegebenen Scheibenwischanlage ermittelt. Eine Frequenzbandbegrenzung zu höherfrequenten Signalen ist in der zweiten signalverarbeitenden Anordnung 22 nicht erforderlich.

Sie kann demzufolge ebenfalls höherfrequente Signalanteile verarbeiten, die in einem Frequenzbereich liegen, für den eigentlich die erste signalverarbeitende Anordnung 14 ausgelegt ist. Wesentlich ist, daß die zweite signalverarbeitende Anordnung 22 erheblich tiefere Frequenzanteile als die erste Anordnung 14 verarbeiten kann. Sie wird vorteilhafterweise als gleichspannungsgekoppelte Anordnung realisiert. Die tiefen Frequenzanteile, die eine im Sekundenbereich liegende Periodendauer aufweisen können, werden beispielsweise durch während des Wischvorgangs auftretende Feuchtigkeits- oder Schmutzschlieren erzeugt. Eine weitere Betätigung der Scheibenwischanlage 18 wäre in diesem Fall unnötig. Deshalb ist die Sperre 24 im zweiten Signalweg 13 vorgesehen, die das zweite Ansteuersignal 25 der Scheibenwischanlage 18 für eine vorgebbare Zeit T unterdrückt. Ein erstes Auftreten eines Signals am Ausgang des zweiten Komparators 23 wird von der Sperre 24 zunächst nicht unterdrückt und löst demzufolge wenigstens einen Wischvorgang aus. Es ist auch möglich, zunächst mehrere Wischvorgänge auszulösen, bevor die Sperre 24 das Signal 25 für die vorgebbare Zeit T unterdrückt. Nach Ablauf der Zeit T können wieder ein oder mehrere Wischvorgänge ausgelöst werden. Sollte dann immer noch am Ausgang des zweiten Komparators 23 ein Signal auftreten, so wird dieses dann wieder die Zeit T unterdrückt.

Der zweite Komparator 23 vergleicht das von der zweiten signalverarbeitenden Anordnung 22 abgegebene Signal mit einer von der Schwellennachführung 16 nachgeführten Schwelle. Auch diese Schwelle ist in Abhängigkeit von dem vom Regensensor 10 abgegebenen Signal, insbesondere dessen Extremwerte abgeleitet und berücksichtigt Langzeiteffekte.

Die für die Sperre 24 vorgebbare Zeit T wird vorzugsweise experimentell ermittelt. Sie liegt erfahrungsgemäß im Sekundenbereich, beispielsweise bei 3 Sekunden. Die Zeit T ist so bemessen, daß eine Feuchtigkeitsschliere ohne weiteren Wischvorgang auf ein nicht störendes Maß reduziert ist, bevor ein erneuter Wischvorgang ausgelöst wird. Eine obere zeitgrenze ist dadurch gegeben, daß langsame Änderungen nach Ablauf der vorgebbaren Zeit T berücksichtigt werden. Langsame Änderungen sind beispielsweise eine nicht verschwindende Schliere oder beispielsweise Nieselregen sowie langsam auf der Scheibe niederschlagender Nebel. Diese Änderungen liegen ebenfalls im Sekundenbereich. Falls während dieser Zeit, während der das zweite Ansteuersignal 25 durch die Sperre 24 unterdrückt ist, plötzlicher Regen auftreten sollte, erfolgt über den ersten Signalweg 12 sofort eine Ansteuerung der Scheibenwischanlage 18.

Eine Auswertung des Signalspektrums im ersten Signalweg 12 gestattet eine Anpassung der Arbeitsgeschwindigkeit der Scheibenwischanlage 18 an den Reinigungsbedarf. Stärkerer Regen oder höhere Fahrgeschwindigkeit einer in einem Kraftfahrzeug eingebauten Vorrichtung führen zu einer Zunahme von höheren Frequenzanteilen im Spektrum, die in der Signalbewertung 21 detektiert wird. Die Signalbewertung 21 ist beispielsweise ein geeignet dimensioniertes Hochpaß-Filter oder eine Differenzieranordnung. Sie gibt ein Signal an die Ansteuerung 19 ab, die eine Erhöhung der Arbeitsgeschwindigkeit der Mechanik 20 veranlaßt.

Die erfindungsgemäße Vorrichtung ist sowohl in analoger als auch in weitgehend digitaler Schaltungstechnik realisierbar. Insbesondere ist eine weitgehende Realisierung des Blockschaltbilds als Arbeitsabläufe in einem Rechner möglich.

## Patentansprüche

1. Vorrichtung zum Betreiben einer Scheibenwischanlage (18), mit wenigstens einem Sensor, vorzugsweise Regensensor (10), der ein Signal abgibt, das ein Maß für die Feuchtigkeit, Wasser oder Schmutz auf einer zu reinigenden Scheibe ist, mit einer Auswerteschaltung (12, 13), die das vom Sensor (10) abgegebene Signal auswertet und ein Signal (17, 25) zur Ansteuerung der Scheibenwischanlage (18) abgibt, wobei die Auswerteschaltung (12, 13) einen ersten Signalweg (12; 14, 15) enthält, der die im Sensorsignal enthaltenen hochfrequenten Anteile auswertet und bei Überschreitung einer Schwelle ein erstes Ansteuersignal (17) für die Scheibenwischanlage (18) abgibt, und wobei die Auswerteschaltung (12, 13) einen zweiten Signalweg (13; 22, 23, 24) enthält, der die im Sensorsignal enthaltenen niederfrequenten Anteile auswertet und bei Überschreitung einer zweiten Schwelle ein zweites Ansteuersignal (25) für die Scheibenwischanlage (18) abgibt, dadurch gekennzeichnet, daß eine Sperre (24) vorgesehen ist, die die Abgabe des zweiten Ansteuersignals (25) nach einem ein- oder mehrmaligem Auftreten dieses Signals (25) für eine vorgegebene Zeit (T) unterdrückt.

2. Vorrichtung nach Anspruch 1, dadurch gekennzeichnet, daß der erste Signalweg (12) eine erste signalverarbeitende Anordnung (14) enthält, deren Durchlaßfrequenz von einem Bandpaß-Filter festgelegt ist.

3. Vorrichtung nach Anspruch 1 oder 2, dadurch gekennzeichnet, daß der zweite Signalweg (13) eine zweite signalverarbeitende Anordnung (22) enthält, die eine gleichspannungsgekoppelte Struktur aufweist.

4. Vorrichtung nach einem der vorhergehenden Ansprüche, dadurch gekennzeichnet, daß die im ersten und/oder zweiten Signalweg (12, 13) vorgesehene Schwelle von einer Schwellennachführung (16) in Abhängigkeit von dem vom Regensensor abgegebenen Signal nachgeführt ist.

5. Vorrichtung nach einem der vorhergehenden Ansprüche,dadurch gekennzeichnet, daß der Regensensor (10) ein optischer Sensor ist mit wenigstens einer Strahlungsquelle und wenigstens einem Strahlungsempfänger.

6. Vorrichtung nach Anspruch 5, dadurch gekennzeichnet, daß die Strahlungsquelle gepulst ist.

7. Vorrichtung nach Anspruch 6, dadurch gekennzeichnet, daß das vom Regensensor (10) abgegebene Signal von einem Filter (11), das ein Hochpaß-Filter enthält, veränderbar ist.

8. Vorrichtung nach einem der vorhergehenden Ansprüche, dadurch gekennzeichnet, daß eine Signalbewertung (21) aus dem im ersten Signalweg (12) auftretenden hochfrequenten Signalanteil ein Signal zur Beeinflussung der Arbeitsgeschwindigkeit der Scheibenwischanlage (18) ermittelt.

## Claims

1. Device for operating a windscreen wiper system (18), having at least one sensor, preferably a rain sensor (10), which emits a signal which is a measure of the moisture, water or dirt on a screen to be cleaned, having an evaluation circuit (12, 13) which evaluates the signal emitted by the sensor (10) and emits a signal (17, 25) for driving the windscreen wiper system (18), the evaluation circuit (12, 13) containing a first signal path (12; 14, 15) which evaluates the high-frequency components contained in the sensor signal and, in the case of exceeding a threshold, emits a first drive signal (17) for the windscreen wiper system (18), and the evaluation circuit (12, 13) containing a second signal path (13; 22, 23, 24) which evaluates the low-frequency components contained in the sensor signal and, in the event of exceeding a second threshold, emits a second drive signal (25) for the windscreen wiper system (18), characterized in that an inhibitor (24) is provided, which suppresses the emission of the second drive signal (25) for a predetermined time (T) after a single or multiple occurrence of the said signal (25).

2. Device according to Claim 1, characterized in that the first signal path (12) contains a first signalprocessing arrangement (14), the pass frequency of which is determined by a bandpass filter.

3. Device according to Claim 1 or 2, characterized in that the second signal path (13) contains a second signal-processing arrangement (22) which has a d.c.-coupled structure.

4. Device according to one of the preceding claims, characterized in that the threshold provided in the first and/or second signal path (12, 13) is tracked by a threshold tracking unit (16) as a function of the signal emitted by the rain sensor (10).

5. Device according to one of the preceding claims, characterized in that the rain sensor (10) is an optical sensor having at least one radiation source and at least one radiation receiver.

6. Device according to Claim 5, characterized in that the radiation source is pulsed.

7. Device according to Claim 6, characterized in that the signal emitted by the rain sensor (10) can be changed by a filter (11) which contains a high-pass filter.

8. Device according to one of the preceding claims, characterized in that a signal rating unit (21) determines a signal for influencing the operating speed of the windscreen wiper system (18) from the high-frequency signal component occurring in the first signal path (12).

## Revendications

1. Dispositif de commande d'un système d'essuie-glace (18) avec au moins un capteur, de préférence un capteur de pluie (10) émettant un signal qui est une mesure de l'humidité, de l'eau ou de la saleté sur une vitre (pare-brise) à nettoyer, un circuit d'exploitation (12, 13) qui exploite le signal émis par le capteur (10) et un signal (17, 25) pour commander le système d'essuie-glace (18), le circuit d'exploitation (12, 13) ayant un premier chemin de signal (12, 14, 15) qui exploite les composantes haute fréquence du signal du capteur et, en cas de dépassement d'un seuil, émet un premier signal de commande (17) de l'installation d'essuie-glace (18), et le circuit d'exploitation (12, 13) comprend un second chemin de signal (13, 22, 23, 24) qui exploite les composantes basse fréquence du signal du capteur et, en cas de dépassement d'un second seuil, émet un second signal de commande (25) pour l'installation d'essuie-glace (18), dispositif caractérisé par une barrière (24) qui inhibe l'émission du second signal de commande (25) après une occurrence ou une multiple occurrence du signal (25) pendant un temps prédéterminé (T).

2. Dispositif selon la revendication 1, caractérisé en ce que le premier chemin de signal (12) comporte un premier dispositif de traitement de signal (14) dont la fréquence passante est fixée par un filtre passe-bande.

3. Dispositif selon la revendication 1 ou 2, caractérisé en ce que le second chemin de signal (13) comporte un second dispositif de traitement de signal (22) qui présente une structure couplée sur une tension continue.

4. Dispositif selon l'une des revendications précédentes, caractérisé en ce que le seuil prévu dans le premier et/ou le second chemin de signal (12, 13) est asservi par un moyen d'asservissement de seuil (16) en fonction du signal émis par le capteur de pluie (10).

5. Dispositif selon l'une des revendications précédentes, caractérisé en ce que le capteur de pluie (10) est un capteur optique comprenant au moins une source de rayonnement et au moins un récepteur de rayonnement.

6. Dispositif selon la revendication 5, caractérisé en ce que la source de rayonnement est impulsionnelle.

7. Dispositif selon la revendication 6, caractérisé en ce que le signal émis par le capteur de pluie (10) est modifié par un filtre (11) qui comprend un filtre passe-haut.

8. Dispositif selon l'une des revendications précédentes, caractérisé en ce qu'un moyen d'exploitation de signal (21) détermine, à partir de la composante haute fréquence du signal dans le premier chemin de signal (12), un signal pour influencer la vitesse de fonctionnement de l'installation d'essuie-glace (18).
